# FASCICULE DE BREVET EUROPEEN

(11) **EP 1 221 857 B1**
(45) Date de publication et mention de la délivrance du brevet: **17.05.2006**
(21) Numéro de dépôt: 00967961.4
(22) Date de dépôt: 06.10.2000
(51) Int. Cl.: A21D 13/00, A21D 8/06, A21B 3/13

(54) **PRODUIT DE BOULANGERIE FOURRE, MOULE ET PROCEDE POUR SA PREPARATION**
GEFÜLLTES BACKWARENERZEUGNIS, BACKFORM UND VERFAHREN ZUR HERSTELLUNG
FILLED BAKERY PRODUCT, MOULD AND METHOD FOR THE PREPARATION THEREOF

(30) Priorité: 15.10.1999 FR 9912993
(43) Date de publication de la demande: 17.07.2002
(73) Titulaire: Magro, Jean-Paul, 35490 Vieux Vy sur Couesnon (FR)
(72) Inventeur: Magro, Jean-Paul, 35490 Vieux Vy sur Couesnon (FR)
(74) Mandataire: Debay, Yves
(86) Numéro de dépôt international: PCT/FR2000/002775
(87) Numéro de publication internationale: WO 2001/028345

(56) Documents cités:
- WO-A-88/03757
- WO-A-98/14063
- DE-A- 4 117 093
- FR-A- 2 516 353
- FR-A- 2 573 628
- FR-A- 2 790 644
- GB-A- 2 289 431
- US-A- 3 518 091

## Description

La présente invention concerne une présentation de mets destinés à l'alimentation humaine. Cette invention concerne également la préparation panetière utilisée pour fabriquer cette présentation. Le moule de cuisson pour fabriquer cette préparation panetière fait également l'objet d'une invention.

Il est connu par le brevet GB 2 289 431, un moyen de préparer une préparation panetière, constitué d'un moule inférieur et d'un moule supérieur. Le moule inférieur dispose d'au moins une partie concave dans laquelle vient s'insérer une partie convexe correspondante formée sur le moule supérieur. Après insertion de la partie convexe dans la partie concave, c'est-à-dire lorsque le moule supérieur est en appui parallèlement contre le moule inférieur, une cavité est formée entre les deux parties, constituant une chambre de cuisson pour la pâte qui y est introduite. De plus, des trous ménagés dans le moule supérieur assurent une fonction d'évent pour la pâte introduite dans la cavité. La préparation panetière obtenue dans D1 est de forme tronconique. La préparation comporte donc une extrémité fermée aplatie lui permettant d'être posée sur une surface.

Dans ce brevet anglais, la section de la préparation est circulaire, ce qui peut s'avérer gênant lors de la mise en bouche de la préparation. La préparation panetière accompagnée ou non d'un mets est donc difficile à mettre en bouche directement. Pour pouvoir être mise en bouche facilement, il conviendrait de réduire le diamètre de la section du côté de l'extrémité ouverte de cette préparation, or en diminuant sa section, on diminue également le volume de la cavité et donc le volume disponible pour y insérer un mets.

Le brevet US 3 518 091 décrit un procédé d'obtention d'un gâteau creux en forme de tasse à café. La préparation une fois cuite présente une cavité qui peut être fourrée par différents mets, notamment des mets liquides comme de la crème anglaise. Pour obtenir une telle préparation, il faut utiliser deux moules un mâle et un femelle que l'on emboîte l'un dans l'autre afin d'obtenir la cavité. Dans ce brevet, la section de la préparation panetière est circulaire.

Le brevet DE 41 17 093 décrit un procédé de remplissage de gâteaux ou préparations panetières creux par un mets. Le mets est conditionné dans un film plastique dont l'une des extrémités est ouverte. Le mets est maintenu dans le film à l'aide d'un appareil d'introduction du mets lequel est muni à l'une de ses extrémités de griffes qui maintiennent fermé le sachet plastique. Le mets est chauffé par diverses moyens connus comme le four à micro-onde, puis inséré dans la préparation panetière à l'aide de l'appareil de d'introduction. l'appareil est glissé dans la cavité de la préparation puis, les griffes sont écartées et le mets libéré à l'intérieur de la préparation. La solution proposée par ce document ne permet pas une manipulation facile et rapide du mets afin de l'insérer dans la cavité de la préparation.

La demande de brevet WO 98 14063 décrit une préparation panetière en forme de cône ou de tasse. Une telle préparation est croustillante, ce qui assure une certaine étanchéité toute en étant moelleuse. Cette demande enseigne également l'utilisation d'un moule mâle et d'un moule femelle afin d'obtenir la préparation, ces moules sont en acier inoxydables. La préparation présente une section circulaire ce qui la rend difficile à mettre en bouche.

Le brevet FR 2 573 628 décrit un procédé de fabrication d'une préparation panetière en forme de récipient qui soit étanche. Pour ce faire, le brevet enseigne l'utilisation de moules mâle et femelle s'emboîtant l'un dans l'autre. ces moules peuvent être réalisés en diverses matériaux tels que la céramique, l'acier inoxydable, etc...

La demande de brevet WO 88 03757 une préparation panetière creuse. Le fond de la cavité de cette préparation est de forme semi-circulaire alors que son extrémité fermée présente une forme tronconique. La section de cette préparation est circulaire. Cette demande décrit également les moules permettant l'obtention de cette préparation.

Le brevet français FR 2 516 353 décrit une préparation panetière de forme cylindro-conique ou toute autre forme polygonale. Cette préparation comporte une cheminée interne qui peut être fourrée par diverses aliments. Le fond de cette préparation est plat.

La présente invention a donc pour objet de pallier en particulier cet inconvénient en proposant une préparation panetière permettant une mise en bouche facile sans réduire le volume utilisé pour insérer un mets. La préparation panetière selon l'invention offre également de nombreux autres avantages. La présentation alimentaire, selon l'invention, présente, par exemple, la caractéristique de pouvoir s'appliquer aux mets fluides, chauds ou froids.

Ce but est atteint par une préparation panetière de forme allongée suivant un axe dit longitudinal, comprenant une cavité formée suivant un axe coaxial à l'axe de la préparation et fermée à une extrémité et ouverte à l'autre, caractérisée en ce que sa section transversale est elliptique.

Selon une autre particularité, l'épaisseur de la préparation est constante.

Selon une autre particularité, la préparation a une forme spécifique pour que l'extrémité ouverte de la cavité soit obturée par un opercule de forme appropriée pour être disposé transversalement pour fermer la cavité et pour assurer son maintien sur la préparation lors de manipulations de la préparation.

Selon une autre particularité, hors de son extrémité fermée, la section transversale de la cavité est importante par rapport à l'épaisseur de la préparation.

Selon une autre particularité, la préparation panetière est de masse inférieure à 200g.

Selon une autre particularité, l'opercule est constitué par une surface annulaire entourée sur chacun de ses bords d'une jupe pour former une gorge, la jupe adjacente au bord extérieur de la surface annulaire étant solidaire par son autre extrémité d'une surface de maintien d'un mets à l'intérieur de la préparation.

Selon une autre particularité, la gorge de l'opercule est de dimension égale ou faiblement inférieure à l'épaisseur de la préparation panetière.

Un deuxième but de l'invention est de proposer un moule de cuisson pour préparer la préparation panetière. Ce moule de cuisson se caractérise en ce qu'il est constitué de deux parties, l'une concave, l'autre convexe, la partie convexe venant s'insérer dans la partie concave et étant centrée dans la partie concave par un épaulement formant la surface d'extrémité de la préparation panetière, un espace étant ménagé entre les deux parties, cet espace déterminant la forme de la préparation panetière.

Selon une autre particularité, un moule de cuisson est constitué dans un matériau choisi parmi les verres, les céramiques et les aciers à usage alimentaire.

Un troisième but de l'invention est de proposer une présentation alimentaire. Cette présentation alimentaire se caractérise en ce qu'elle est constituée d'une préparation panetière et d'un mets culinaire destiné à être inséré dans ladite préparation et dont les éventuels morceaux de taille excessive sont réduits à une dimension de manière à faciliter la mastication humaine.

Selon une autre particularité, le mets est conditionné sous enveloppe membraneuse de qualité alimentaire.

Un dernier but de l'invention est de proposer un procédé de mise en oeuvre de la présentation alimentaire. Ce procédé se caractérise en ce qu'il comprend les étapes suivantes :
- de réchauffage séparé et sensiblement simultané de la préparation panetière et du mets conditionné,
- de découpe de l'enveloppe membraneuse contenant le mets réchauffé,
- d'introduction du mets dans la cavité de la préparation panetière réchauffée,
- de mise en place d'un opercule (12) au niveau de l'extrémité ouverte de la cavité (100) pour maintenir le mets à l'intérieur.

Selon une autre particularité, une étape supplémentaire de conditionnement de la présentation dans un étui isotherme peut intervenir si le client l'emporte pour la consommer ultérieurement.

Selon une autre particularité le mets est habituellement consommé de manière traditionnelle, c'est à dire à table et avec des couverts.

L'invention, avec ses caractéristiques et avantages, ressortira plus clairement à la lecture de la description faite en référence aux dessins annexés dans lesquels :
- les figures 1, 2 et 3 représentent la préparation panetière selon l'invention respectivement de face, suivant A-A de la figure 1 et en coupe transversale,
- les figure 4 et 5 représentent un mets enveloppé sous son enveloppe, respectivement de face et de côté,
- la figure 6 représente un opercule selon l'invention,
- les figure 7 et 8 représentent, en coupe longitudinale, la présentation alimentaire selon l'invention munie de son opercule et accompagnée d'un mets sous enveloppe déjà tronçonnée, respectivement de face et suivant A'-A',
- la figure 9 représente en coupe longitudinale et de face, la présentation alimentaire selon l'invention, munie de son opercule et accompagnée d'un mets déconditionné,
- les figures 10 et 11 représentent le moule selon l'invention respectivement en coupe longitudinale de face et en coupe transversale suivant C-C de la figure 10,
- la figure 12 représente, en coupe longitudinale et de face, une variante du moule selon l'invention,
- la figure 13, représente, en coupe longitudinale et de face, une variante du moule selon l'invention.

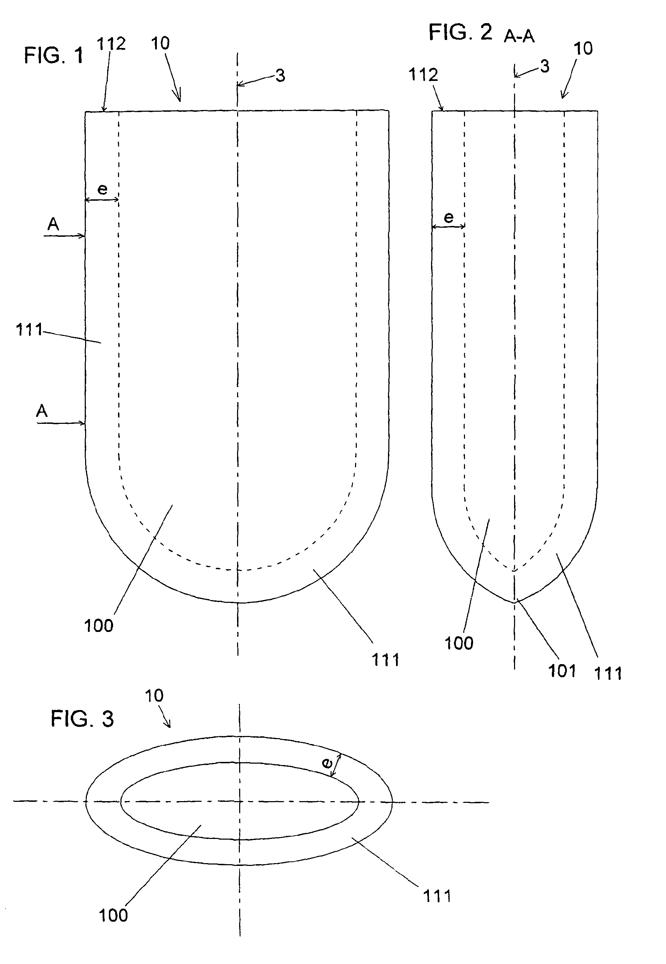

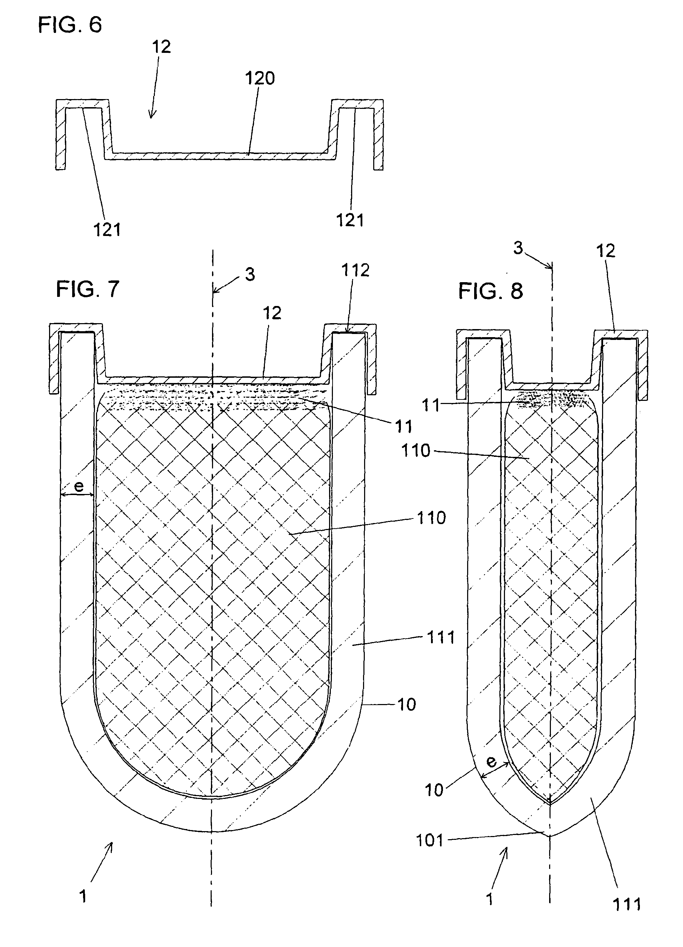

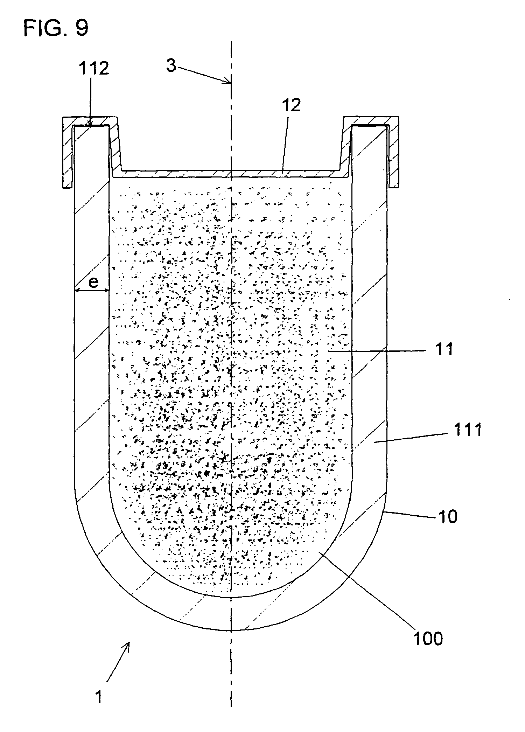

Selon l'invention, la présentation alimentaire (1), représentée en figures 7, 8 et 9, est constituée d'une préparation panetière (10) accompagnée d'un mets (11). La préparation panetière (10) est fabriquée à partir d'un moule (2). Cette préparation (10), comme représentée aux figures 1 et 2, a une forme allongée suivant un axe (3) dit longitudinal. Cette préparation (10) comprend une cavité (100) formée suivant un axe coaxial à l'axe (3) de la préparation (10). Cette cavité (100) est fermée à une extrémité de la préparation (10) et ouverte à l'autre et est destinée à accueillir le mets (11) pour constituer la présentation alimentaire (1). Cette cavité (100) est cylindrique à très faiblement conique. La préparation (10) a, autrement dit, la forme d'un fourreau. La section transversale de cette préparation (10), visible en figure 3, est elliptique de manière à pouvoir être mise en bouche facilement. Du fait de la dépouille formée sur le moule selon l'invention, cette section est constante à très faiblement croissante de l'extrémité fermée de la cavité (100) à l'extrémité ouverte de celle-ci. Cette variation de section étant faible, elle n'est pas visible sur les figures.

La préparation (10) aura, par exemple, une masse inférieure à 200 grammes.

Cette préparation (10) est également remarquable en ce que son épaisseur, définie par e, est constante, même au niveau de l'extrémité fermée de la cavité (100), comme représenté en figure 1. Au niveau de l'extrémité fermée de la cavité (100), suivant le plan vertical passant par le grand axe de la section elliptique, la préparation (10) est en arrondi et suivant le plan passant par le petit axe de la section, la préparation (10) se termine en pointe (101) profilée. La préparation (10) selon l'invention se termine sensiblement en pointe (101) profilée, comme représenté en figure 2, de manière à conserver l'épaisseur e constante.

En outre, sur toute la longueur de la préparation (10), l'épaisseur e de la préparation (10) est faible par rapport à la section transversale de la cavité (100). La section transversale de la cavité (100) est par exemple comprise entre la moitié et les quatre cinquièmes de la section totale de la préparation, représentée en figure 3. Cette caractéristique se vérifie en particulier au niveau de l'extrémité ouverte de la cavité (100).

La préparation (10) se caractérise en ce qu'elle peut recevoir un opercule (12) de manière à fermer la cavité (100), comme représenté figures 7, 8 et 9. Cet opercule (12) représenté figure 6, est de forme spécifique pour s'emboîter et se maintenir sur la préparation (10). De cette manière, cet opercule (12) pourra maintenir un mets (11) disposé dans la cavité (100). Cet opercule (12) est de forme elliptique, afin d'obturer parfaitement la cavité (100) de la préparation (10). Il est par exemple formé d'une surface (120) ayant des dimensions sensiblement égales à celles de la section transversale de la cavité (100). Cette surface (120) est entourée d'une gorge (121). Cette gorge (121) est de dimension sensiblement égale ou inférieure à l'épaisseur e de la préparation (10). De ce fait, lorsque l'opercule est placé sur la préparation (10), les parois (111) de la préparation (10), au niveau de l'extrémité ouverte de la cavité (100), sont prises en tenaille par la gorge (121) de l'opercule (12). En outre, la préparation (10) peut être notamment posée à plat sur son opercule (12). L'opercule (12) permettra donc de manipuler la présentation alimentaire (1) sans aucun risque.

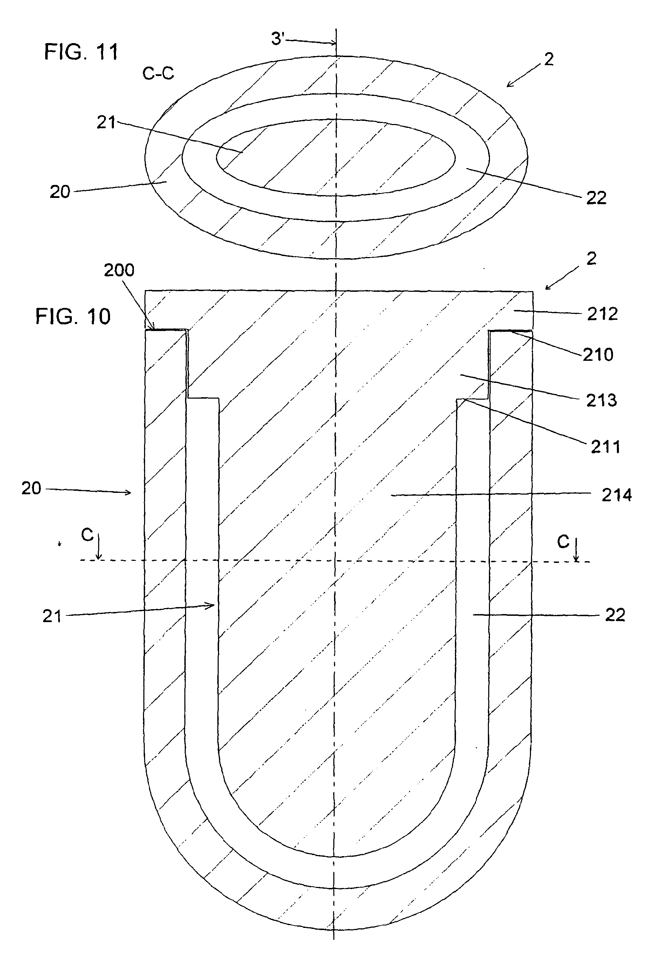

La préparation (10) dispose également d'une forme spécifique pour accueillir l'opercule (12). Cette forme lui est donnée par le moule (2) selon l'invention. Ce moule est de section transversale elliptique, comme représenté figure 11, de manière à donner sa forme elliptique à la section transversale de la préparation (10), représentée en figure 3.

La préparation a, par exemple, une épaisseur e de 10 mm. La section transversale elliptique de la cavité (100) a préférentiellement un grand axe de 70 à 100 mm de longueur et un petit axe d'environ 20 mm de longueur.

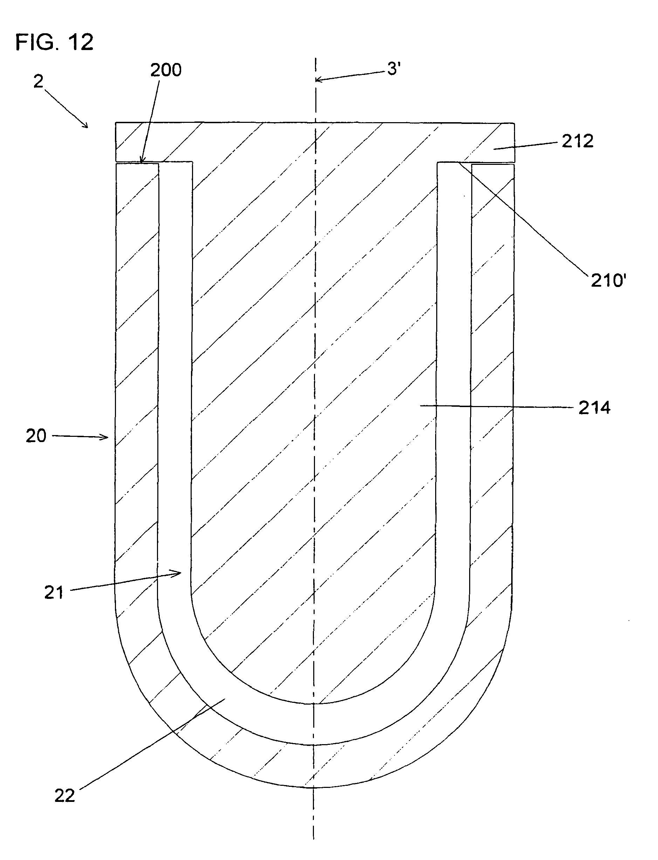

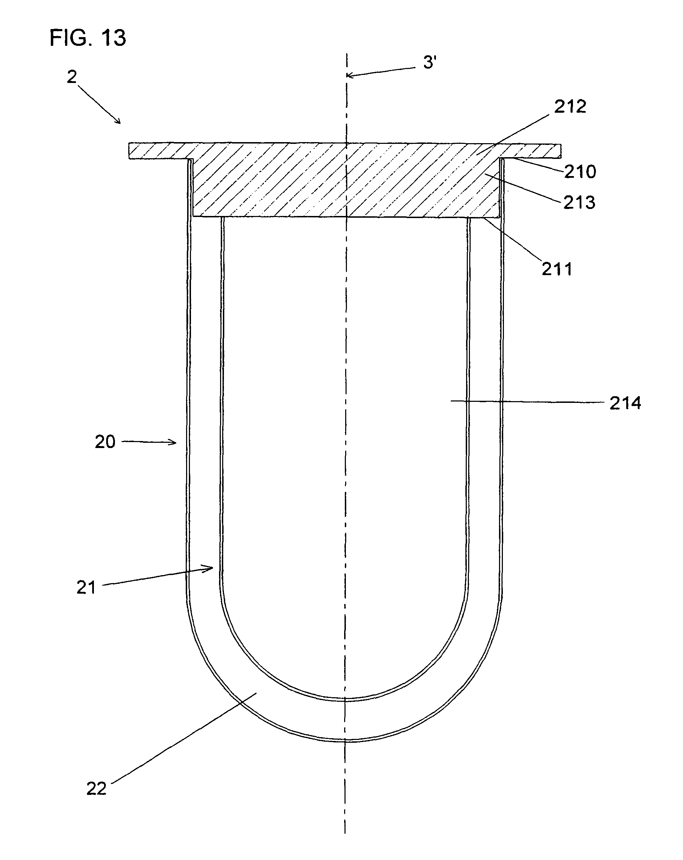

Le moule (2) selon l'invention est visible en figure 10. Le moule (2) est formée d'une partie concave (20) ayant une section en forme de U suivant un axe (3') dit longitudinal et dans laquelle vient s'insérer suivant un axe coaxial à l'axe (3') longitudinal du moule (2), une partie convexe (21) ou noyau. Sur la figure 10, ainsi qu'en figure 12 et 13, la paroi latérale intérieure de la partie concave (20) et la paroi latérale extérieure de la partie convexe (21) du moule (2) sont représentées à la verticale, or en fait, celles-ci sont très légèrement inclinées vers l'extérieur par rapport à la verticale pour former une dépouille, de manière à pouvoir démouler la préparation panetière (10) obtenue à partir du moule (2). La partie concave (20) et la partie convexe (21) sont toutes deux symétriques par rapport à l'axe (3') du moule (2). Pour donner sa forme à la préparation panetière (10), la forme intérieure de la partie concave (20), suivant le plan passant par le grand axe de la section elliptique se termine en arrondi et suivant le plan passant par le petit axe de la section elliptique, elle se termine en pointe profilée. Il en est de même pour le noyau venant s'insérer dans la partie concave. Il a une forme extérieure, suivant le plan passant par le grand axe de la section elliptique qui se termine en arrondi et suivant le plan passant par le petit axe de la section elliptique, qui se termine en pointe profilée. Ce noyau est constitué d'une structure, par exemple, monobloc munie de deux épaulements (210, 211) successifs. Le premier épaulement (210) est formé entre une première partie (212), destinée à se reposer sur le bord (200) libre de la partie concave (20) et une deuxième partie (213) ayant une section transversale sensiblement égale à la section transversale de la cavité formée dans la partie concave (20). La première partie (212) aura, par exemple, une section transversale sensiblement égale à la section transversale totale de la partie concave (20). Le bord (200) libre de la partie concave (20) est, par exemple, plan suivant un plan perpendiculaire à l'axe (3') du moule (2), de manière à pouvoir poser, en position stable, la partie convexe (21) insérée dans la partie concave (20). Le deuxième épaulement (211) est formé entre cette deuxième partie (213) et une troisième partie (214) ayant une section transversale inférieure à la section transversale de la deuxième partie (213). La différence entre les deux sections transversales des deuxième et troisième parties (213, 214) définit donc un espace (22) lorsque la première partie (212) repose sur le bord (200) libre de la partie concave (20). Cet espace (22) définit la forme de la préparation (10).

De la pâte est d'abord introduite dans la partie concave (20). Ensuite la partie convexe (21) est insérée dans la partie concave (20). La partie convexe (21) peut, par exemple, être liée à la partie concave (20) de manière à contrarier la montée de la pâte. Ou, selon une autre variante, les parties concave (20) et convexe (21) ne sont pas liées entre elles et celle des deux qui se trouve en position supérieure est suffisamment lourde pour contrarier la montée de la pâte. L'ensemble (20, 21) est ensuite placé dans une chambre de pousse pour faire monter la pâte dans l'espace (22) qui lui est réservé. Sa montée se trouve contenue par le second épaulement (211) formant butée. Une fois que la pâte est entièrement montée, elle est cuite. Pour cela, le moule (2) est placé dans un four, par exemple, réglé à 250°C pendant environ 15 minutes. La pâte est préférentiellement molle ou grasse. La quantité de pâte introduite dépend de la préparation panetière (10) que l'on souhaite obtenir. Par exemple, la préparation (10) pourra être dense ou plus aérée. La préparation panetière (10) obtenue par ce moule (2) dispose en particulier, grâce à la butée, sur sa surface supérieure d'un bord (112) libre plan suivant le plan perpendiculaire à l'axe (3) de la préparation (10), de manière à ce que l'opercule (12) puisse parfaitement s'adapter sur la préparation (10).

Le moule (2) selon l'invention peut être fabriqué dans des aciers à usage alimentaire, en verre ou en céramique. Selon une variante plus simple représentée en figure 12, la partie convexe (21) du moule (2) ne comprend qu'un seul épaulement (210') entre la première partie (212) et la troisième partie (214). La pâte, lorsqu'elle monte, vient alors en butée contre cet épaulement (210').

Selon une autre variante représentée en figure 13, la partie concave (20) du moule est constitué d'une fine épaisseur de tôle, la pâte étant toujours contenue par l'épaulement (211) formée sur la partie convexe (21) comme dans la figure 10. Selon cette variante, la partie basse de la partie convexe (21) est creuse. Les première et deuxième parties (212, 213) pourront être, dans cette variante, les parties d'une plaque métallique où plusieurs moules de ce type pourront être alignés.

Selon une particularité, la préparation (10) panetière garde son humidité car le moule (2), selon l'invention, ne comporte pas d'évents. Selon une variante, le moule (2) selon l'invention pourra comporter des évents de manière à conférer à la préparation panetière (10) un taux d'humidité inférieur.

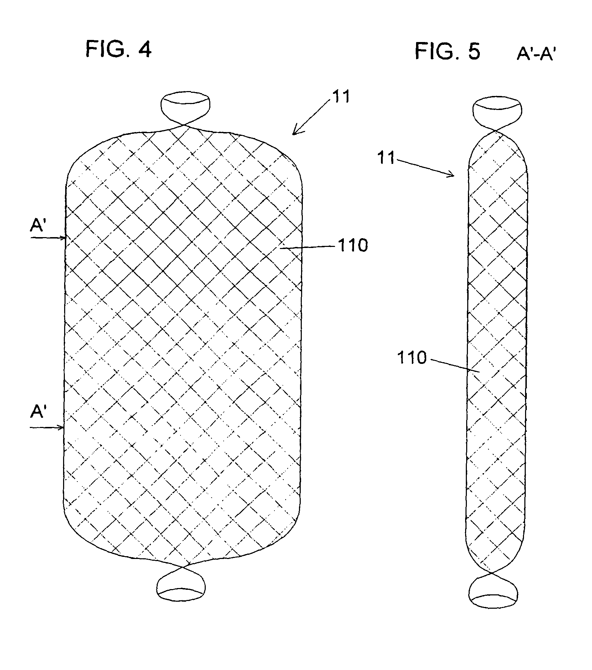

Dans la cavité (100) de la préparation obtenue, on insère un mets (11) pour former une présentation alimentaire. L'opercule (12) est ensuite placé sur la préparation (10) pour la refermer, permettant ainsi de la manipuler avec son mets sans risque. Sur les figures 4 et 5, le mets (11) est représenté emballé sous une enveloppe (110) de qualité alimentaire susceptible de s'ouvrir pour libérer le mets en coupant ses extrémités. Sur la figure 7, la présentation (1) alimentaire est représentée le mets (11) sous enveloppe (110) déjà tronçonnée. Sur la figure 8, la présentation alimentaire est représentée avec un mets déconditionné. La présentation alimentaire (1) pourra, par exemple, être congelée avec son opercule (12) et son mets (11) encore enveloppé.

Quelques exemples de préparation de la présentation alimentaire (1) selon l'invention sont présentés ci-après.

### Exemple 1 : Présentation alimentaire de la daube provençale.

La daube provençale réalisée en cuisine par un homme de l'art selon une recette établie, est refroidie jusqu'à la température ambiante puis dissociée en trois parties. Viandes, légumes et aromates, sauce. Les viandes sont alors mécaniquement réduites en fragments de dimensions de l'ordre, par exemple du demi-centimètre, de manière à faciliter la mastication humaine, puis progressivement réintégrées dans la sauce jusqu'à constituer une pâte homogène. Les légumes et aromates sont ensuite incorporés. Le mélange est coulé par portion standardisée dans une enveloppe (110) membraneuse comestible à la manière d'une chair à saucisse dans un boyau de porc. L'enveloppe (110) est refermée par ligature et l'ensemble est entreposé au froid. La portion de daube ainsi conditionnée est livrée au point de vente dans le respect de la chaîne du froid avec sa date de péremption.

Une pâte à pain, réalisée en boulangerie par un homme de l'art et selon une recette établie, est coulée dans les moules selon l'invention. Cette pâte est cuite au four chauffant à 250°C pendant 15 minutes. Après refroidissement, les préparations panetières (10) obtenues sont démoulées, conditionnées, puis livrées aux points de vente, directement ou après congélation. Au comptoir de vente, à la demande du client et de préférence à la vue de celui-ci, l'opérateur réchauffe simultanément mais séparément, la préparation panetière (10) et la portion de daube, puis il insère celle-ci réchauffée dans la préparation (10) tiédie. La présentation alimentaire (1) ainsi prête à la consommation est remise au client avec une serviette.

### Exemple 2 : Présentation alimentaire d'une brandade de morue à la nîmoise.

La brandade de morue réalisée en cuisine par un homme de l'art et selon une recette établie, est refroidie à température ambiante puis coulée en portions standardisées dans des enveloppes (110) de qualité alimentaire, comme à l'exemple 1. L'enveloppe (110) est refermée par ligature et l'ensemble est entreposé au froid. La portion de brandade ainsi conditionnée est livrée au point de vente dans le respect de la chaîne du froid et avec sa date de péremption. Au comptoir de vente, l'opérateur réchauffe simultanément mais séparément, la préparation panetière préparée et livrée selon l'exemple 1, et la portion de brandade. Il tronçonne une extrémité de l'enveloppe (110) et fait couler la brandade chaude dans la préparation (10) tiédie. L'ensemble est coiffé d'un opercule (12) protégeant l'extrémité ouverte de la cavité (100). L'aliment est conditionné dans un étui isotherme puis remis au client qui l'emporte pour une consommation ultérieure.

### Exemple 3 : Présentation alimentaire d'une salade chinoise.

Une salade chinoise est préparée en cuisine par un homme de l'art selon une recette établie, mais la préparation est arrêtée juste avant le mélange des ingrédients. Les carottes, le poivron et les concombres sont râpés, les crevettes tronçonnées mais les pousses de soja laissées entières. Tous ces ingrédients sont versés en portion unitaire dans une enveloppe (110) et assaisonnés avec la sauce au soja émulsionnée. L'enveloppe (110) est refermée et l'ensemble entreposé au froid. La portion de salade ainsi conditionnée est livrée au point de vente dans le respect de la chaîne du froid et avec sa date de péremption. Au comptoir de vente, l'opérateur réchauffe la préparation panetière (10) préparée et livrée selon l'exemple 1, il y introduit la salade déconditionnée de son enveloppe (110). La présentation alimentaire (1) est alors enveloppée dans un papier alimentaire puis donnée au client avec une serviette.

### Exemple 4 : Présentation alimentaire d'un repas composé de salade chinoise et de daube provençale.

La salade chinoise et la daube provençale sont préparées selon les exemples 1 et 3. Elles sont ensuite conditionnées puis livrées en demi-doses. Au comptoir de vente, à la demande du client, l'opérateur réchauffe la préparation panetière préparée et livrée selon l'exemple 1. Il réchauffe la demi-dose de daube provençale, tronçonne les extrémités de l'enveloppe (110) entourant la daube et introduit la daube dans la préparation (10). Puis, il place la demi-dose de salade chinoise déconditionnée de son enveloppe (110). Le repas ainsi préparé est tendu au client, par exemple, avec une serviette.

Par exemple, le mets pourra être également constitué de viandes hachées, de volailles hachées ou de poissons hachés. Il pourra, dans ce cas, être par exemple, accompagné d'une sauce. La présentation alimentaire selon l'invention sera donc parfaitement adaptée pour la restauration rapide.

La préparation panetière selon l'invention offre donc comme avantage de pouvoir s'accompagner de tous les types de mets, chauds, froids, liquides...

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Préparation panetière (10) de forme allongée suivant un axe (3) dit longitudinal, d'épaisseur constante et de section transversale elliptique, comprenant une cavité (100) formée suivant un axe coaxial à l'axe (3) de la préparation (10) et fermée à une extrémité et ouverte à l'autre, la préparation (10) ayant une forme spécifique pour que l'extrémité ouverte de la cavité (100) soit obturée par un opercule (12) de forme appropriée pour être disposé transversalement pour fermer la cavité (100) et pour assurer son maintien sur la préparation lors de manipulations de la préparation (10) **caractérisée en ce que** l'opercule (12) est constitué par une surface elliptique entourée sur son bord d'une gorge (121) dont le bord extérieur forme jupe, l'opercule comportant en son centre une surface de maintien d'un mets à l'intérieur de la préparation (10), ladite surface formant par son bord la jupe intérieure constituant la gorge périphérique.

2. Préparation panetière (10) selon la revendication 1, **caractérisée en ce que**, hors de son extrémité fermée, la section transversale de la cavité (100) est importante par rapport l'épaisseur de la préparation (10).

3. Préparation panetière (10) selon l'une des revendications 1 ou 2, **caractérisée en ce qu'**elle est de masse inférieure à 200g.

4. Préparation panetière (10) selon la revendication 1, **caractérisée en ce que** la gorge (121) de l'opercule (12) est de dimension égale ou faiblement inférieure à l'épaisseur de la préparation panetière (10).

5. Moule (2) de cuisson pour préparer une préparation panetière (10) du type selon les revendications 1 à 4, **caractérisé en ce qu'**il est constitué de deux parties, l'une concave (20), l'autre convexe (21), la partie convexe (21) venant s'insérer dans la partie concave (20) suivant un axe longitudinal (3') et étant centrée dans la partie concave (20) par un épaulement formant la surface d'extrémité de la préparation panetière (10), un espace (22) étant ménagé entre les deux parties (20, 21), cet espace déterminant la forme de la préparation panetière (10), les deux parties (20, 21) ayant respectivement une section elliptique avec chacune un grand axe orienté selon une première direction déterminée et un petit axe inférieur au grand axe orienté selon une seconde direction déterminée, les deux parties (20, 21) ayant en outre chacune une terminaison comprenant un arrondi suivant le plan longitudinal qui inclut ladite première direction.

6. Moule de cuisson selon la revendication 5, **caractérisé en ce qu'**il est constitué dans un matériau choisi parmi les verres, les céramiques et les aciers à usage alimentaire, les deux parties (20, 21) ayant chacune une terminaison comprenant une pointe profilée suivant le plan longitudinal qui inclut ladite seconde direction.

7. Présentation alimentaire (1), **caractérisée en ce qu'**elle est constituée d'une préparation panetière (10) selon l'une des revendications 1 à 4, et d'un mets (11) culinaire, conditionné sous enveloppe (110) membraneuse de forme correspondant à la forme de la cavité et de qualité alimentaire susceptible de s'ouvrir pour libérer le mets en coupant l'une de ses extrémités, destiné à être inséré dans ladite préparation (10) et dont les éventuels morceaux de taille excessive sont réduits à une dimension de manière à faciliter la mastication humaine.

8. Procédé de mise en oeuvre de la présentation alimentaire (1) selon les revendications 7, **caractérisé en ce qu'**il comprend les étapes suivantes :
- de réchauffage séparé et sensiblement simultané de la préparation panetière (10) et du mets (11) conditionné,
- de découpe de l'enveloppe (110) membraneuse contenant le mets (11) réchauffé,
- d'introduction du mets (11) dans la cavité (100) de la préparation panetière (10) réchauffée,
- de mise en place d'un opercule (12) au niveau de l'extrémité ouverte de la cavité (100) pour maintenir le mets à l'intérieur.

9. Procédé de mise en oeuvre de la présentation alimentaire (1) selon la revendication 8, **caractérisé en ce qu'**une étape supplémentaire de conditionnement de la présentation (1) dans un étui isotherme peut intervenir si le client l'emporte pour la consommer ultérieurement.

10. Procédé de mise en oeuvre de la présentation alimentaire (1) selon la revendication 8 ou 9, **caractérisé en ce que** le mets (11) est habituellement consommé de manière traditionnelle, c'est à dire à table et avec des couverts.

## Claims

1. Bread-type preparation (10) of a form that is elongated along a "longitudinal" axis (3), of a constant thickness and with an elliptical cross section, comprising a cavity (100) formed along an axis coaxial to the axis (3) of the preparation (10) and closed at one end and open at the other, the preparation (10) having a specific shape so that the open end of the cavity (100) is sealed by a protective cover (12) of an appropriate shape to be arranged transversely in order to close off the cavity (100) and to ensure that it is held over the preparation during handling of the preparation (10) **characterised in that** the protective cover (12) is constituted by an elliptical surface surrounded on its edge by a groove (121), the outer edge of which forms a skirt, the protective cover comprising in its centre a surface for keeping a food item inside the preparation (10), said surface forming, by its edge, the inner skirt constituting the peripheral groove.

2. Bread-type preparation (10) according to Claim 1, **characterised in that**, apart from its closed end, the cross section of the cavity (100) is sizeable compared with the thickness of the preparation (10).

3. Bread-type preparation (10) according to one of Claims 1 or 2, **characterised in that** it weighs less than 200 g.

4. Bread-type preparation (10) according to Claim 1, **characterised in that** the dimensions of the groove (121) of the protective cover (12) are equal to or slightly less than the thickness of the bread-type preparation (10).

5. Cooking mould (2) for preparing a bread-type preparation (10) of the type according to Claims 1 to 4, **characterised in that** it is constituted by two parts, one concave (20), the other convex (21), the convex part (21) being inserted into the concave part (20) along a longitudinal axis (3') and being centred within the concave part (20) by a shoulder forming the end surface of the bread-type preparation (10), a space (22) being made between the two parts (20, 21), this space determining the shape of the bread-type preparation (10), the two parts (20, 21) having respectively an elliptical section each having a major axis oriented in a second determined direction, the two parts (20, 21) each also having a termination comprising a rounding in the longitudinal plane that includes said first direction.

6. Cooking mould according to Claim 5, **characterised in that** it is constituted by a material chosen from types of glass, ceramics and food-grade steels, the two parts (20, 21) each having a termination comprising a shaped point in the longitudinal plane that includes said second direction.

7. Food presentation (1), **characterised in that** it is constituted by a bread-type preparation (10) according to one of Claims 1 to 4, and by a cooked food item (11) packed in a membranous envelope (110) with a shape corresponding to the shape of the cavity and of food grade, suitable for being opened to release the food item by cutting one of its ends, intended to be inserted into said preparation (10) and in which any excessively large pieces are reduced to a dimension so as to facilitate human chewing.

8. Method of implementing the food presentation (1) according to Claims 7, **characterised in that** it comprises the following steps:
- separate and substantially simultaneous heating of the bread-type preparation (10) and packed food item (11),
- cutting the membranous envelope (110) containing the heated food item (11),
- introducing the food item (11) into the cavity (100) of the heated bread-type preparation (10),
- positioning a protective cover (12) over the open end of the cavity (100) in order to keep the food item inside.

9. Method of implementing the food presentation (1) according to Claim 8, **characterised in that** an additional step of packing the presentation (1) in an isothermal case can be performed if the customer takes it away for later consumption.

10. Method of implementing the food presentation (1) according to Claim 8 or 9, **characterised in that** the food item (11) is usually consumed in a traditional manner, i.e. at a place setting on a table.

## Patentansprüche

1. Brotzubereitung (10), die eine längliche Form gemäß einer als Längsachse (3) bezeichneten Achse, eine gleichbleibende Dicke und einen elliptischen Querschnitt aufweist, mit einem Hohlraum (100), der gemäß einer zur Achse (3) der Zubereitung (10) koaxialen Achse gebildet, an einem Ende geschlossen und am anderen Ende offen ist, wobei die Zubereitung (10) eine spezifische Form aufweist, um das offene Ende des Hohlraums von einem Deckel (12) zu verschließen, dessen Form so geeignet ist, dass er quer angeordnet werden kann, um den Hohlraum (100) zu verschließen und dessen Halterung auf der Zubereitung bei der Handhabung der Zubereitung (10) zu gewährleisten, **dadurch gekennzeichnet, dass** der Deckel (12) aus einer elliptischen Fläche besteht, die an ihrem Rand von einer Nut (121) umgeben ist, deren Außenrand eine Schürze bildet, wobei der Deckel in seiner Mitte eine Fläche zum Halten einer Speise innerhalb der Zubereitung (10) aufweist, wobei die Fläche durch ihren Rand die Innenschürze bildet, die die umlaufende Nut darstellt.

2. Brotzubereitung (10) nach Anspruch 1, **dadurch gekennzeichnet, dass** abgesehen von dessen geschlossenem Ende der Querschnitt des Hohlraums (100) im Verhältnis zur Dicke der Zubereitung (10) beträchtlich ist.

3. Brotzubereitung (10) nach Anspruch 1 oder 2, **dadurch gekennzeichnet, dass** deren Masse geringer ist als 200 g.

4. Brotzubereitung (10) nach Anspruch 1, **dadurch gekennzeichnet, dass** die Nut (121) des Deckels (12) gleiche oder geringfügig kleinere Abmessungen hat als die Dicke der Brotzubereitung (10).

5. Backform (2) zum Zubereiten einer Brotzubereitung (10) vom Typ gemäß der Ansprüche 1 bis 4, **dadurch gekennzeichnet, dass** sie aus zwei Teilen besteht, wobei der eine (20) konkav und der andere (21) konvex ist, wobei sich der konvexe Teil (21) gemäß einer Längsachse (3') in den konkaven Teil (20) einfügt und im konkaven Teil (20) über eine Schulter zentriert ist, die die Endfläche der Brotzubereitung (10) bildet, wobei ein Raum (22) zwischen den beiden Teilen (20, 21) vorgesehen ist, der die Form der Brotzubereitung (10) bestimmt, wobei die beiden Teile jeweils einen elliptischen Querschnitt mit einer großen Achse, die gemäß einer ersten festgelegten Richtung ausgerichtet ist, und einer kleinen Achse, die kleiner als die große Achse und gemäß einer zweiten festgelegten Achse ausgerichtet ist, besitzen, wobei die beiden Teile (20, 21) zudem jeweils ein Endstück mit einer Abrundung gemäß der Längsebene aufweisen, die die erste Richtung einschließt.

6. Backform nach Anspruch 5, **dadurch gekennzeichnet, dass** sie aus einem Material besteht, das unter den für Nahrungszwecke geeigneten Glas-, Keramik- und Stahlmaterialien ausgewählt ist, wobei die beiden Teile (20, 21) jeweils ein Endstück aufweisen, die eine Profilspitze gemäß der Längsebene aufweist, welche die zweite Richtung einschließt.

7. Nahrungsanordnung (1), **dadurch gekennzeichnet, dass** sie aus einer Brotzubereitung (10) nach einem der Ansprüche 1 bis 4 sowie einer kulinarischen Speise (11) besteht, welche in einer membranformigen Hülle (110) verpackt ist, deren Form der Form des Hohlraums entspricht und die essbar ist und geöffnet werden kann, um die Speise durch Aufschneiden eines ihrer Enden freizugeben, wobei die Speise in die Zubereitung (10) eingesetzt werden kann und deren etwaige übermäßig große Stücke auf eine Größe reduziert werden, die das Kauen durch den Menschen erleichtert.

8. Verfahren zum Ausführen der Nahrungsanordnung (1) nach Anspruch 7, **dadurch gekennzeichnet, dass** es folgende Schritte aufweist:
- Getrenntes und im wesentlichen gleichzeitiges Aufwärmen der Brotzubereitung (10) und der verpackten Speise (11),
- Aufschneiden der membranförmigen Hülle (110), die die aufgewärmte Speise (11) enthält,
- Einführen der Speise (11) in den Hohlraum (100) der aufgewärmten Brotzubereitung (10),
- Einsetzen eines Deckels (12) am offenen Ende des Hohlraums (100), um die Speise im Inneren festzuhalten.

9. Verfahren zum Ausführen der Nahrungsanordnung (1) nach Anspruch 8, **dadurch gekennzeichnet, dass** ein zusätzlicher Schritt des Verpackens der Anordnung (1) in eine isothermische Hülse stattfinden kann, wenn der Kunde sie zum späteren Verzehr mitnimmt.

10. Verfahren zum Ausführen der Nahrungsanordnung (1) nach Anspruch 8 oder 9, **dadurch gekennzeichnet, dass** die Speise (11) im allgemeinen in herkömmlicher Weise, d.h. am Tisch mit Besteck, verzehrt wird.
